# EUROPEAN PATENT APPLICATION

(11) **EP 4 549 108 A1**
(43) Date of publication of application: **07.05.2025**
(21) Application number: 22953235.3
(22) Date of filing: 28.07.2022
(51) Int. Cl.: B25J 11/00, B25J 9/00, B25J 19/02, G01G 19/52

(54) **SERVING ROBOT**

(71) Applicant: LG Electronics Inc., Yeongdeungpo-gu Seoul 07336 (KR)
(72) Inventor: LEE, Jiho, Seoul 06772 (KR); LEE, Kangsuk, Seoul 06772 (KR); RUE, Jungyoun, Seoul 06772 (KR); YUN, Heemin, Seoul 06772 (KR); HUR, Hoon, Seoul 06772 (KR); AN, Byungsoo, Seoul 06772 (KR)
(74) Representative: Vossius & Partner Patentanwälte Rechtsanwälte mbB
(86) International application number: PCT/KR2022/011102
(87) International publication number: WO 2024/025010

(57) **Abstract**

A serving robot comprises: a traveling unit; a vertical frame positioned on the upper part of the traveling unit and extending in the vertical direction; a plurality of coupling units positioned in the vertical frame so as to be spaced in the vertical direction; a support bracket fixed to one of the plurality of coupling units; a tray plate comprising a flat upper surface; a first coupling bracket positioned on the lower part of the tray plate; and a second coupling bracket positioned on the upper surface of the support bracket and being formed so as to be coupled to the first coupling bracket. The serving robot enables a user to freely change the position of a tray as necessary, thereby enabling carrying foods of various sizes.

## Description

### [Technical Field]

The present disclosure relates to a serving robot that may adjust locations of a plurality of trays.

### [Background]

To take charge of a portion of factory automation, robots have been developed for industrial use. Recently, fields of application of the robots have been further expanding, and not only a medical robot and an aerospace robot, but also a robot that may be used in a daily life are being developed.

Such robot for the daily life is being developed to provide a specific service (e.g., shopping, serving, conversation, cleaning, and the like) in response to a user command. Unlike the industrial robot that performs repetitive tasks by being fixed at a specific location or a robot that performs a specific specialized function at a high cost, such as the medical or aerospace robots, travel and communication functions are important for the robot for the daily life and the robot for the daily life is difficult to be distributed when a manufacturing cost thereof is too high.

In particular, because the robot does not walk on two feet like humans but moves using wheels, the robot must be able to move over a bump on the floor or avoid an obstacle, must be able to minimize impact without falling when moving over the bump on the floor, and must be able to make quick decisions using multiple sensors to avoid the obstacle.

One that has been actively developed recently as an example of such a robot is a serving robot that may transport a bowl containing liquid food such as noodle or soup. The bowl containing the food may be put on a tray equipped in the robot and the robot may transport the food to a customer or a service provider.

Although a required spacing between the trays may vary depending on a type of food served, the existing serving robot has a constant spacing between the trays, causing unnecessary waste of space or limiting a use of a lower tray.

### [Summary]

### [Technical Problem]

The present disclosure is to provide a serving robot that may adjust locations of a plurality of trays.

### [Technical Solutions]

Provided is a serving robot including a driving unit, a vertical frame positioned above the driving unit and extending in a vertical direction, a plurality of fastening portions positioned on the vertical frame and spaced apart from each other in the vertical direction, a support bracket fixed to one of the plurality of fastening portions, a tray plate including a flat top surface, a first fastening bracket positioned beneath the tray plate, and a second fastening bracket positioned on a top surface of the support bracket and having a shape to be engaged with the first fastening bracket.

The first fastening bracket may include the plurality of fastening portions, and the second fastening bracket may be selectively coupled to the one of the plurality of fastening portions.

The serving robot may further include a first fastener extending through the tray plate, the first fastening bracket, and the second fastening bracket.

The serving robot may further include a tray cover covering the top surface of the tray plate.

The tray cover may include a material having a high friction force or may be subjected to a surface treatment for increasing the friction force.

The vertical frame may include a pair of vertical frames spaced apart from each other,

the tray plate may be positioned between the pair of vertical frames, wherein the support bracket includes a pair of support brackets respectively coupled to the pair of vertical frames and supporting both sides of the tray plate.

The serving robot may further include a load cell that is coupled to the tray plate and senses a change in a weight of an article positioned on the tray plate.

The load cell may have one side fixed to the vertical frame and an opposite side located under the tray plate.

The load cell may include a strain gage positioned at the opposite side thereof.

The load cell may include a weight sensor positioned on the top surface of the tray plate, and a flexible substrate extending through a hole defined in the vertical frame to be connected to a controller, and the serving robot may include a tray cover covering the weight sensor.

The serving robot may further include a sensor hole defined upward of each fastening portion of the vertical frame, and an optical sensor exposed via the sensor hole, and the optical sensor may sense a change on the tray plate.

The optical sensor may include a plurality of optical sensors arranged in a horizontal direction.

### [Advantageous Effects]

The user may freely change the location of the tray as needed, so that food of various sizes may be transported.

In addition, whether the article is seated on the tray may be sensed, so that the article may be mounted within the limited load range.

In addition, the movement speed and the like may be controlled based on the vertical level of the tray on which the article is located, and the movement may be started after the article is seated, thereby performing the stable movement.

In addition, when the weight change occurs during the movement, it may be determined that the article has fallen, so that the movement may be stopped and the notification may be provided.

Effects obtainable from the present disclosure are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating a cloud system based on a 5G network according to an embodiment of the present disclosure.
FIG. 2 is a block diagram illustrating a configuration of a serving robot according to an embodiment of the present disclosure.
FIG. 3 is a diagram illustrating a robot control system according to an embodiment of the present disclosure.
FIG. 4 is a diagram illustrating a serving robot according to an embodiment of the present disclosure.
FIG. 5 is a diagram illustrating a method for fastening a tray of a serving robot according to the present disclosure.
FIG. 6 shows cross-sectional views taken along lines A-A and B-B in FIG. 4 according to an embodiment of FIG. 5.
FIG. 7 is a diagram illustrating another method of fastening a tray of a serving robot according to the present disclosure.
FIG. 8 shows cross-sectional views taken along of lines A-A and B-B in FIG. 4 according to an embodiment of FIG. 7.
FIG. 9 is a view illustrating various embodiments of a location at which a tray of a serving robot according to the present disclosure is fastened.
FIG. 10 is a diagram illustrating a principle of a load cell of a serving robot according to the present disclosure.
FIG. 11 is an exploded view according to an embodiment of a tray of a serving robot according to the present disclosure.
FIG. 12 is a view illustrating an arrangement of a flexible substrate of a weight sensor in FIG. 11.
FIGS. 13 and 14 are diagrams illustrating another embodiment of a serving robot according to the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a autonomous mobile robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a driving path and a driving plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined path, and a driving technique in which, after a destination is decided, a path to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a Lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, position information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

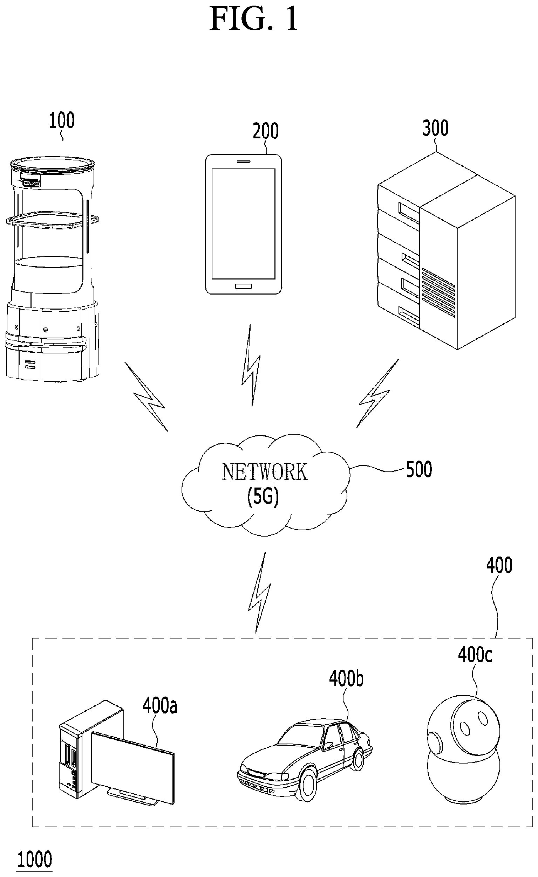

FIG. 1 is a diagram illustrating a cloud system 1000 based on a 5G network according to an embodiment of the present disclosure.

Referring to FIG. 1, the cloud system 1000 may include a autonomous mobile robot 100, a mobile terminal 300, a robot control system 200, various devices 400, and a 5G network 500.

The autonomous mobile robot 100 is a robot that transports goods (articles) from a departure point to a destination. The autonomous mobile robot 100 can move directly from a logistics center to a destination. Alternatively, after the autonomous mobile robot is loaded on a vehicle at the logistics center and is then delivered to the vicinity of the destination by the vehicle, the autonomous mobile robot is unloaded from the vehicle and then moves to the destination.

In addition, the autonomous mobile robot 100 may move articles to the destination not only outdoors but also indoors. The autonomous mobile robot 100 can be implemented as an AGV, and the AGV may be a transport device that moves by a sensor, a magnetic field, a vision device, etc. on the floor.

The autonomous mobile robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the autonomous mobile robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the autonomous mobile robot 100 and respond to various requests of the autonomous mobile robot 100. For example, the robot control system 200 may perform calculations using artificial intelligence (AI) based on the request from the autonomous mobile robot 100.

In addition, the robot control system 200 may determine a movement path of the autonomous mobile robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the autonomous mobile robot 100 arrives at the transport destination of the articles, the autonomous mobile robot 100 can directly deliver the articles to the home robot 400c through communication with the home robot 400c.

The various devices 400 may be connected to the autonomous mobile robot 100, the mobile terminal 300, the robot control system 200, etc., via the 5G network 500 by wire or wirelessly.

The autonomous mobile robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

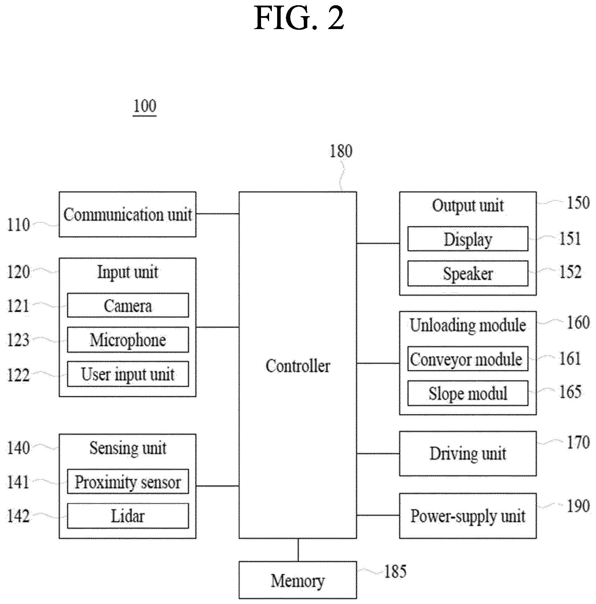

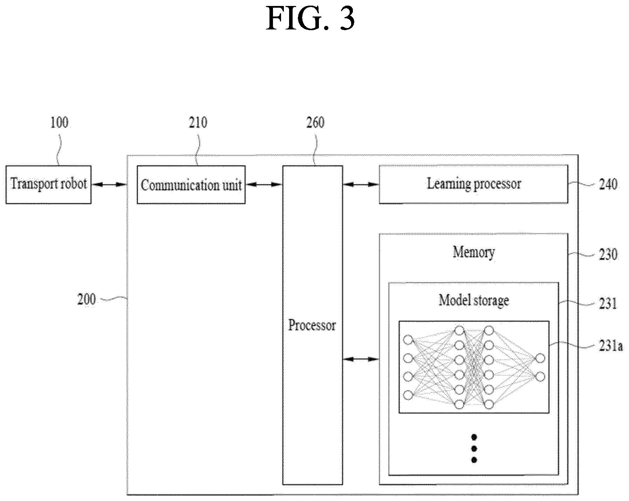

FIG. 2 is a block diagram illustrating appearance of the autonomous mobile robot 100 according to an embodiment of the present disclosure. The autonomous mobile robot 100 according to an embodiment of the present disclosure will be described with reference to FIGS. 3 to 5.

Referring to FIG. 2, the autonomous mobile robot 100 may include a body including a storage area 50, and constituent components to be described later may be included in the body. The autonomous mobile robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the autonomous mobile robot 100, such that it should be noted that the autonomous mobile robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the autonomous mobile robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the autonomous mobile robot 100, surrounding environment information of the autonomous mobile robot 100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the autonomous mobile robot 100. The memory 185 may store not only a plurality of application programs (or applications) driven by the autonomous mobile robot 100, but also data and commands required to operate the autonomous mobile robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the autonomous mobile robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the autonomous mobile robot 100, may include wheels or legs, and may include a wheel driving unit and a leg driving unit for controlling the wheels or legs.

A plurality of wheels provided on the bottom surface of the wheel driving unit may be controlled to move the autonomous mobile robot 100 including the body. The wheels may include a main wheel 171 for fast driving, a caster 173 for changing the direction to another direction, and an auxiliary caster for stable driving so that the loaded articles (L) do not fall during driving.

The leg driving unit (not shown) may control multiple legs according to control of the controller 180, and may thus move the body. The plurality of legs may correspond to a configuration formed so that the autonomous mobile robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The autonomous mobile robot 100 may move the body through the driving unit 170 having at least one of the wheel driving unit and/or the leg driving unit. However, in this specification, an example in which the wheel driving unit is mounted on the autonomous mobile robot 100 will be mainly described.

The controller 180 is a module that controls the configurations of the autonomous mobile robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

### [Figure 3 - Machine Learning Standard]

Referring to FIG. 3, the robot control system 200 may include an artificial intelligence (AI) server. The AI server may mean a device that uses a machine learning algorithm to train an artificial neural network or uses a trained artificial neural network. Here, the robot control system 200 may include a plurality of servers to perform distributed processing, and may be defined as a 5G network. At this time, the AI server may be included as a part of the configuration of the autonomous mobile robot 100, and may also enable the autonomous mobile robot 100 to perform at least a part of the AI processing.

The robot control system 200 may include a communication unit 210, a memory 230, a learning processor 240, a processor 260, etc.

The communication unit 210 may transmit and receive data to and from an external device such as the autonomous mobile robot 100.

The memory 230 may include a model storage unit 231. The model storage unit 231 may store a learning or learned model (or an artificial neural network 231a) through the learning processor 240.

The learning processor 240 may train (or learn) the artificial neural network 231a using training data (also called learning data). The learning model may be used while being loaded into the robot control system 200 of the artificial neural network, or may be loaded into an external device such as the autonomous mobile robot 100 and then used.

The learning model may be implemented as hardware, software, or a combination of hardware and software. If all or some of the learning model are implemented as software, one or more commands constituting the learning model can be stored in the memory 230.

The processor 260 may infer a result value for new input data using the learning model, and may generate a response or control command based on the inferred result value.

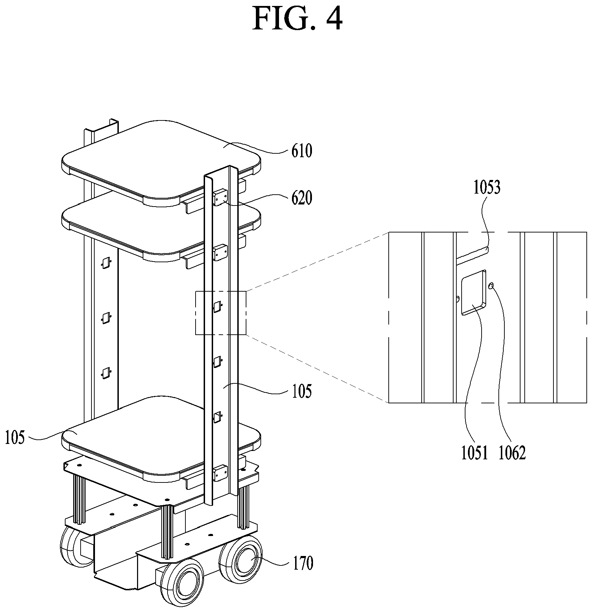

FIG. 4 is a diagram illustrating a serving robot 100 according to an embodiment of the present disclosure. FIG. 4 is a diagram illustrating a state in which a housing forming an outer appearance is removed, and illustrates a driving unit 170, frames 104 and 105, and a tray 610.

The serving robot 100 is a robot that carries a bowl containing food or an empty bowl in a restaurant or the like, and a demand thereof is increasing because of a recent increase in labor costs. The serving robot 100 is largely divided into a lower structure and an upper structure.

In the lower structure, the driving unit 170 composed of a plurality of wheels, a battery, and a substrate module for control are mounted, and a component with a great weight is mounted.

A terminal for charging the battery or connecting to an external device may be disposed to be exposed to the outside, and various sensors such as the lidar 142 and the proximity sensor 141 may be disposed in the lower structure for movement.

The upper structure may include the tray 610 and the bowl may be placed on the tray 610. The vertical frame 105 extending vertically upward from the lower structure to fix the tray 610 may be included, and the vertical frame 105 may not necessarily extend to form 90° but may extend obliquely.

The single vertical frame 105 may support the tray 610, but as shown in FIG. 4, it is more stable that a pair of vertical frames 105 are located on left and right sides of the tray 610. Hereinafter, a description will be made based on a structure of the tray 610 supported by the pair of vertical frames 105.

The tray 610 may include a tray plate 612 made of a metal material or an injection-molded material having rigidity to support a weight of the bowl. A fastening structure 614 fastened to the vertical frame 105 may be included beneath the tray plate 612.

A tray cover 611 having high-friction elasticity such as rubber or silicon may be further added to a top surface of the tray plate 612 to prevent the bowl seated on the tray 610 from falling during the movement or stopping of the robot.

The tray cover 611 may be removed from the tray plate 612 for washing, enabling hygienic use. Additionally, the tray cover 611 may also cover a second fastener 615 extending through the tray plate 612, thereby enhancing the outer appearance.

The tray 610 may include a plurality of trays as shown in FIG. 4, and three trays 610 are illustrated in the drawing, but the number thereof may be increased or decreased. Because a height varies depending on food served, there is a need to install the trays 610 at a different spacing for each user.

The serving robot 100 according to the present disclosure may install the trays 610 on the vertical frame 105 by freely adjusting the number and locations of the trays 610, enabling customization for the user.

To install the tray 610 at various vertical levels, the vertical frame 105 may include a plurality of fastening holes 1052 spaced apart from each other in a vertical direction, and the user may fix the tray 610 using a fastening hole 1052 at a desired location.

In addition to the fastening hole 1052, the vertical frame 105 may further include an opening 1051 through which a load cell 620 for sensing a weight of the tray 610 passes, a sensor hole 1053 to which an optical sensor 628 for sensing an article on the tray 610 is coupled, or the like.

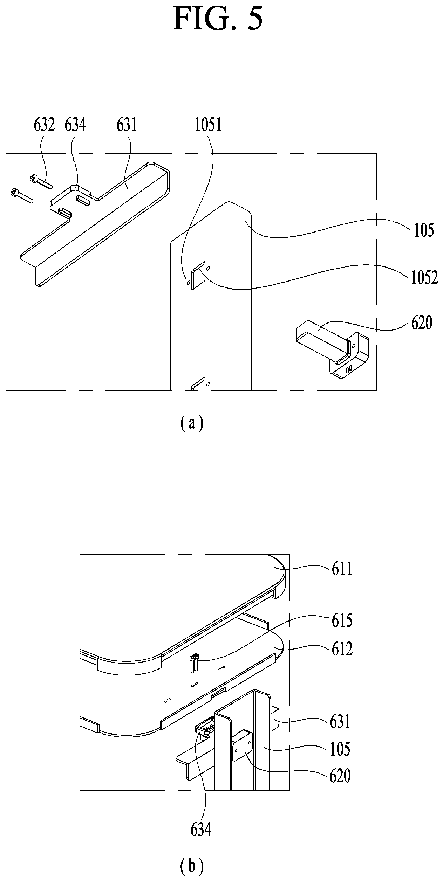

FIG. 5 is a diagram illustrating a method for fastening the tray 610 of the serving robot 100 according to the present disclosure. (a) in FIG. 5 illustrates a support bracket 631, the vertical frame 105, and the load cell 620. One side of the support bracket 631 may be fixed to the vertical frame 105 and the other side thereof may have a cross-section bent in a L-shape to support the tray 610. That is, one side may be disposed in the vertical direction and the other side may be disposed in a horizontal direction.

The support bracket 631 may be fixed via a first fastener 632 extending through one side of the support bracket 631 and the vertical frame 105, and two or more first fasteners 632 may be used for stable support force.

The load cell 620 is a component for sensing a change in the weight when the article such as the bowl is seated on the tray 610. The load cell 620 of the present embodiment may extend through the vertical frame 105 such that an end thereof is positioned under the support bracket 631.

The load cell 620 that is located under the support bracket 631 may sense the change in the weight of the article or the bowl seated on the tray 610 and may sense a change in the weight of the tray 610 to determine whether the bowl is seated on the tray 610. In addition, when the bowl exceeds an allowable weight of the tray 610, a warning may be issued to guide placement of an article of an appropriate weight.

(b) in FIG. 5 is a diagram illustrating a process of seating the tray 610 on the support bracket 631. After fixing the support bracket 631 to the vertical frame 105, the tray 610 may be seated on the support bracket 631. As described above, the tray 610 may be composed of the tray plate 612 having the rigidity and the tray cover 611 covering the top surface of the tray plate 612.

A lower portion of the tray plate 612 and a top surface of the other side of the support bracket 631 may be fastened to each other, and a first fastening bracket 614 and a second fastening bracket 634 including irregularities may be included to accurately guide a location.

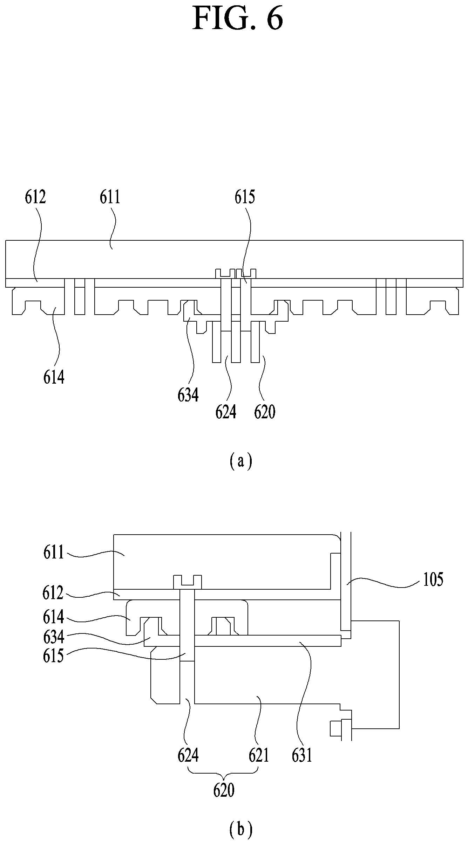

FIG. 6 shows cross-sectional views taken along lines A-A and B-B in FIG. 4 according to an embodiment of FIG. 5. As illustrated in FIG. 6, the first fastening bracket 614 may be attached to the lower portion of the tray plate 612 using a separate screw, or may have a shape to be coupled to the second fastening bracket 634 of the support bracket 631 as the tray plate 612 is processed.

The first fastening bracket 614 and the second fastening bracket 634 may include the irregularities that are engaged with each other, and may guide the tray plate 612 to be seated at an accurate location of the support bracket 631.

Because a sufficient coupling force is not able to be secured only with the irregularities of the first fastening bracket 614 and the second fastening bracket 634, the tray plate 612, the first fastening bracket 614, and the second fastening bracket 634 may be coupled to each other using the second fastener 615.

In the present embodiment, as shown in FIG. 6, the second fastener 615 may also extend through a portion of the load cell 620. As the second fastener 615 is also fastened to the load cell 620, a force of supporting the tray 610 may be improved, and a load may be directly transmitted to the load cell 620 to enable accurate measurement of the weight change. For the stable supporting force, two or more second fasteners 615 may be fastened.

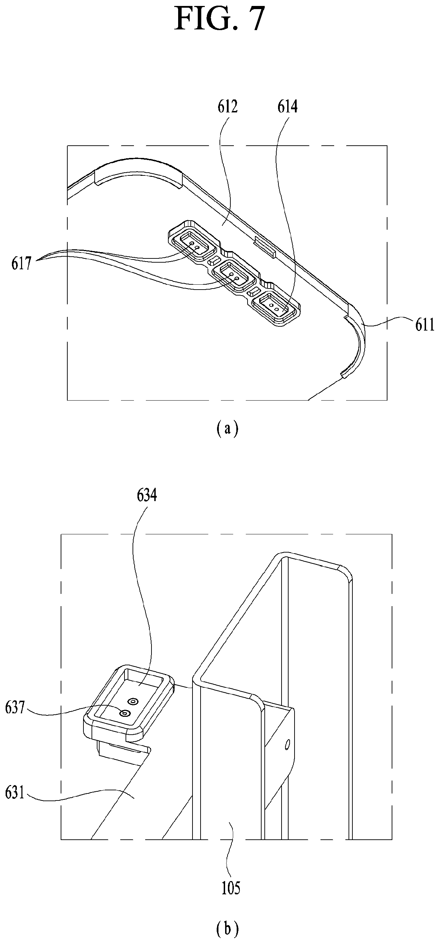

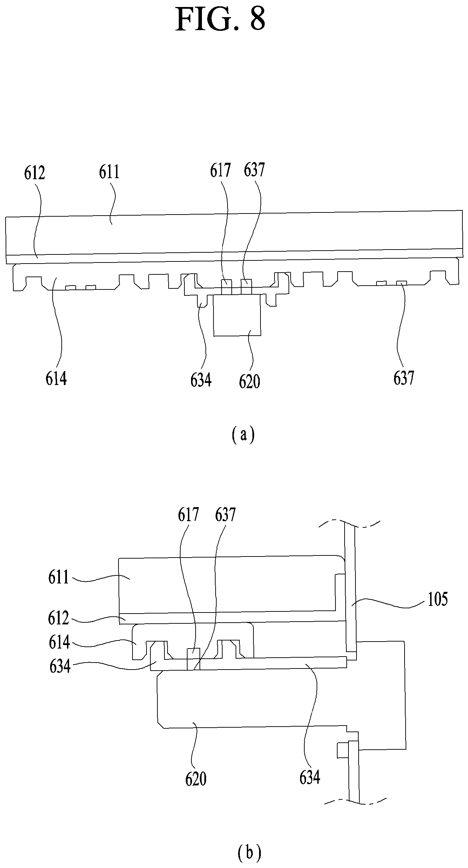

FIG. 7 is a diagram illustrating another method of fastening the tray 610 of the serving robot 100 according to the present disclosure, and FIG. 8 shows cross-sectional views taken along of lines A-A and B-B in FIG. 4 according to an embodiment of FIG. 7. The first fastening bracket 614 and the second fastening bracket 634 of the present embodiment may be fastened to each other using a magnet without using the second fastener 615 such as the screw. A magnet having high rigidity such as neodymium may be used to support the tray 610 not to move.

A first magnet 617 positioned at the first fastening bracket 614 and a second magnet 637 positioned at the second fastening bracket 634 may have opposite polarities and may be attached to each other as shown in FIG. 8. When using the magnet, the location may be easily adjusted even though the fastening force is weaker than that in the above-described embodiment.

Referring to FIG. 7, the first fastening bracket 614 may include a plurality of fastening portions 6141 having a shape corresponding to that of the second fastening bracket 634. Because the first fastening bracket 614 is located between the pair of vertical frames 105, the plurality of fastening portions 6141 may be arranged side by side in a second direction perpendicular to a first direction in which the pair of vertical frames 105 are arranged to be spaced apart from each other.

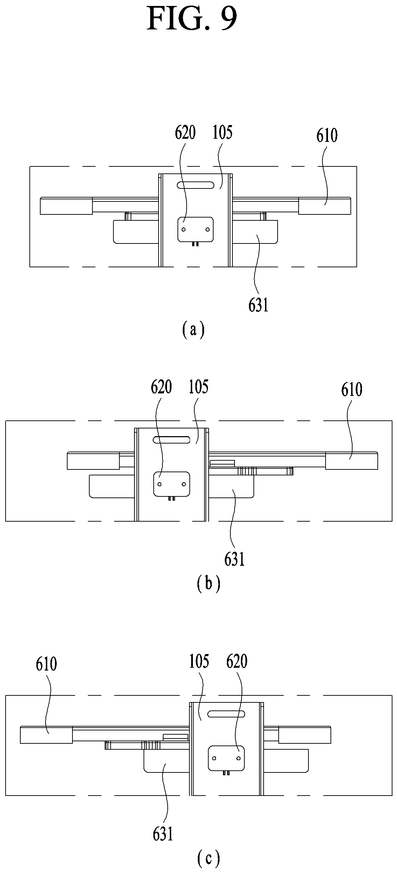

FIG. 9 is a view illustrating various embodiments of a location at which the tray 610 of the serving robot 100 according to the present disclosure is fastened. As illustrated in FIG. 9, the location of the tray 610 may vary based on the location at which the second fastening bracket 634 is fastened to the first fastening bracket 614.

For example, the plurality of trays 610 arranged in the vertical direction may be arranged in a zigzag (to be misaligned in the second direction). When fastening the trays by repeatedly placing the tray 610 on au upper side as shown in (a) and placing the tray 610 on a lower side as shown in (c), a space is secured above each tray 610, so that it is easy to insert and remove the bowl.

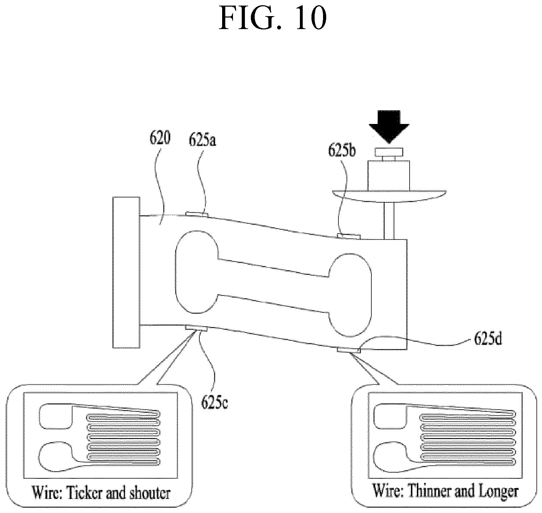

FIG. 10 is a diagram illustrating a principle of the load cell 620 of the serving robot 100 according to the present disclosure. One side of the load cell 620 may be fixed to the vertical frame 105 and the other side thereof may be located under the tray 610, and a strain gage 625 may be disposed at a portion of the load cell 620 located under the tray 610.

The strain gage 625 is a pressure sensor using a conductive line formed in a serpentine shape as shown in FIG. 10. In the serpentine shape, the conductive line may become shorter and thicker during compression and may become longer and thinner during tension. A resistance of the conductive line may vary based on such a change in the conductive line, and current may vary accordingly.

A controller may sense such a current change to determine whether a pressure is applied to the load cell 620, and determine that the article is mounted on the tray 610.

As shown in FIG. 10, an end of the load cell 620 may be pressed downward and may be finely bent. Accordingly, a strain gage 625b positioned on top of the end of a load cell body 621 and a strain gage 625c positioned beneath a portion of the load cell body adjacent to the vertical frame 105 are compressed, and remaining strain gages 625a and 625d are stretched.

The plurality of strain gages 625 may be used for accuracy, but when it is for determining only whether the article is mounted rather than to measure an accurate weight, only one strain gage 625 may be disposed on the load cell body 621 to determine only whether the article is mounted on the tray.

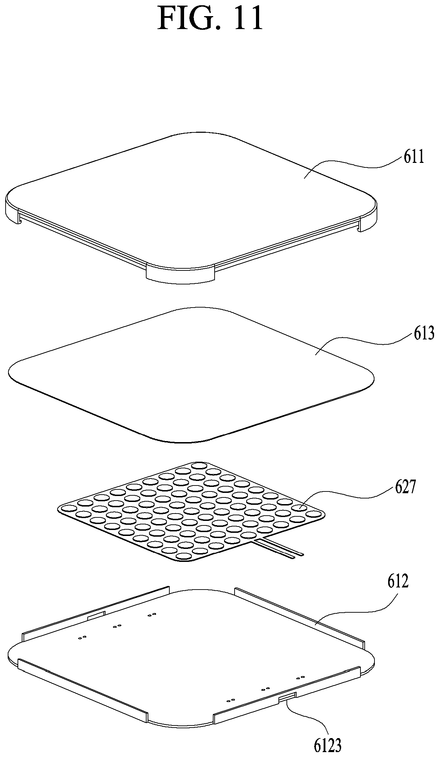

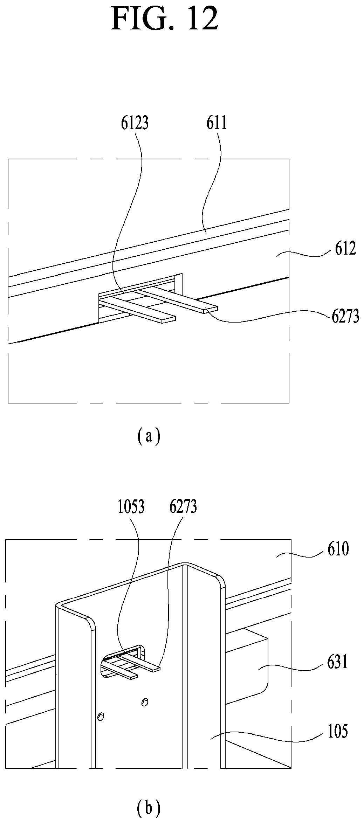

FIG. 11 is an exploded view according to an embodiment of the tray 610 of the serving robot 100 according to the present disclosure, and FIG. 12 is a view illustrating an arrangement of a flexible substrate 6275 of a weight sensor 627 in FIG. 11.

In addition to the load cell 620 inserted into the vertical frame 105, the weight sensor 627 may be disposed in the tray 610 itself. The weight sensor 627 may have the strain gage 625 directly located on the tray 610 or may use a coil and sense a spacing between the coil and a metal plate to determine whether the bowl is placed on the tray 610.

The weight sensor 627 is operated by receiving power, and should be connected to the controller 180 to transmit a sensed signal to the controller 180. A signal line of the flexible substrate 6275 connected to the weight sensor 627 may extend in a lateral direction of the tray 610 as shown in (a) in FIG. 12, and may extend to the vertical frame 105 via a hole defined in the vertical frame 105 as shown in (b) in FIG. 12.

Because the vertical frame 105 extends in a longitudinal direction, the flexible substrate 6275 may extend down to the controller 180 located at a lower structure.

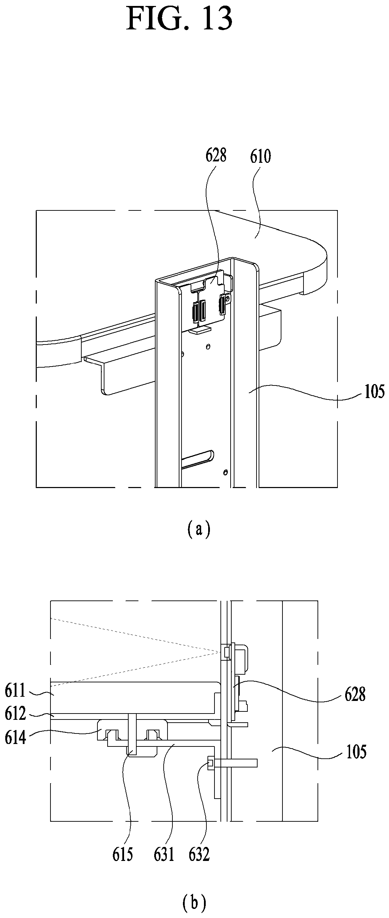

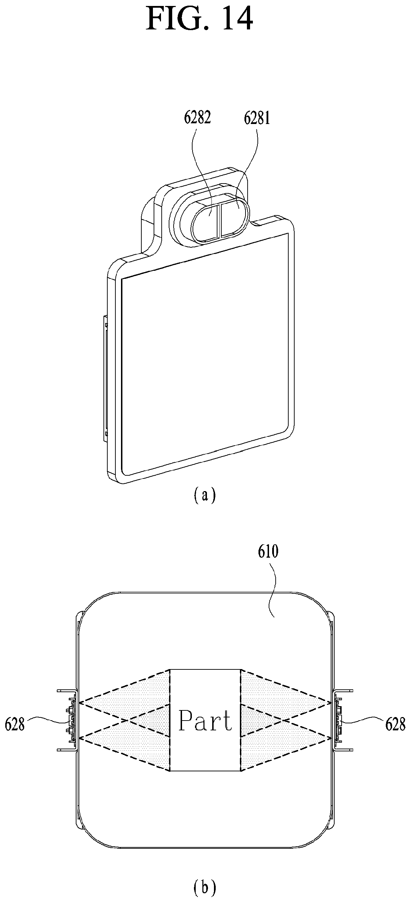

FIGS. 13 and 14 are diagrams illustrating another embodiment of the serving robot according to the present disclosure. In the present embodiment, the presence or absence of the article may be sensed using the optical sensor 628 other than the pressure sensor for sensing the weight of the article seated on the tray 610.

The optical sensor 628 may be installed on the vertical frame 105 as shown in FIG. 13, and may be disposed to face the top surface of the tray 610 as shown in (b) in FIG. 13.

As shown in (a) in FIG. 14, the optical sensor 628 may include a light emitting unit 6281 and a light receiving unit 6282, and the light receiving unit 6282 may sense light emitted from the light emitting unit 6281 and returning after reaching the article, thereby sensing the object on the tray.

Because the space above the tray 610 is not wide, two optical sensors 628 may be arranged in the second direction in consideration of a viewing angle of the optical sensor 628 to widen a sensing range as shown in (b) in FIG. 14.

After determining whether the article is mounted on the tray 610 as such, when a vertical level of the tray on which the article is mounted is high, a speed may be lowered for stable movement. In addition, when the weight change occurs on the tray 610 during the movement, it may be determined that the article has fallen, so that the movement may be stopped and an alarm may be provided to the user.

As described above, the user may freely change the location of the tray 610 as needed, so that food of various sizes may be transported.

In addition, whether the article is seated on the tray 610 may be sensed, so that the article may be mounted within the limited load range.

In addition, the movement speed and the like may be controlled based on the vertical level of the tray 610 on which the article is located, and the movement may be started after the article is seated, thereby performing the stable movement.

In addition, when the weight change occurs during the movement, it may be determined that the article has fallen, so that the movement may be stopped and the notification may be provided.

The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A serving robot comprising:
a driving unit;
a vertical frame positioned above the driving unit and extending in a vertical direction;
a plurality of fastening portions positioned on the vertical frame and spaced apart from each other in the vertical direction;
a support bracket fixed to one of the plurality of fastening portions;
a tray plate including a flat top surface;
a first fastening bracket positioned beneath the tray plate; and
a second fastening bracket positioned on a top surface of the support bracket and having a shape to be engaged with the first fastening bracket.

2. The serving robot of claim 1, wherein the first fastening bracket includes the plurality of fastening portions,
wherein the second fastening bracket is selectively coupled to the one of the plurality of fastening portions.

3. The serving robot of claim 1, further comprising a first fastener extending through the tray plate, the first fastening bracket, and the second fastening bracket.

4. The serving robot of claim 3, further comprising a tray cover covering the top surface of the tray plate.

5. The serving robot of claim 4, wherein the tray cover includes a material having a high friction force or is subjected to a surface treatment for increasing the friction force.

6. The serving robot of claim 1, wherein the vertical frame includes a pair of vertical frames spaced apart from each other,
wherein the tray plate is positioned between the pair of vertical frames, wherein the support bracket includes a pair of support brackets respectively coupled to the pair of vertical frames and supporting both sides of the tray plate.

7. The serving robot of claim 1, further comprising a load cell coupled to the tray plate and configured to sense a change in a weight of an article positioned on the tray plate.

8. The serving robot of claim 7, wherein the load cell has one side fixed to the vertical frame and an opposite side located under the tray plate.

9. The serving robot of claim 8, wherein the load cell includes a strain gage positioned at the opposite side thereof.

10. The serving robot of claim 7, wherein the load cell includes:
a weight sensor positioned on the top surface of the tray plate; and
a flexible substrate extending through a hole defined in the vertical frame to be connected to a controller,
wherein the serving robot includes a tray cover covering the weight sensor.

11. The serving robot of claim 1, further comprising:
a sensor hole defined upward of each fastening portion of the vertical frame; and
an optical sensor exposed via the sensor hole,
wherein the optical sensor senses a change on the tray plate.

12. The serving robot of claim 11, wherein the optical sensor includes a plurality of optical sensors arranged in a horizontal direction.
